# EUROPÄISCHE PATENTSCHRIFT

(11) **EP 0 422 472 B1**
(45) Veröffentlichungstag und Bekanntmachung des Hinweises auf die Patenterteilung: **27.12.1995**
(21) Anmeldenummer: 90118753.4
(22) Anmeldetag: 29.09.1990
(51) Int. Cl.: C07F 7/18, C07C 265/04

(54) **Verfahren zur Herstellung von O-silylierten Hydroxylverbindungen und ihre Verwendung zur Herstellung von Estergruppen aufweisenden Isocyanaten**
Method for the preparation of compounds containing an O-silylated hydroxyl group, and their application in the preparation of ester groups containing isocyanates
Procédé de préparation de composés contenant un groupe hydroxyle O-silylé et leur utilisation pour la préparation d'isocyanates ayant des groupes esters

(30) Priorität: 12.10.1989 DE 3934100
(43) Veröffentlichungstag der Anmeldung: 17.04.1991
(73) Patentinhaber: BAYER AG, 51368 Leverkusen (DE)
(72) Erfinder: Schmalstieg, Lutz, Dr., D-5000 Koeln 1 (DE); Pedain, Josef, Dr., D-5000 Koeln 80 (DE); Nachtkamp, Klaus, Dr., D-4000 Düsseldorf 13 (DE)

(56) Entgegenhaltungen:
- US-A- 4 207 247
- US-A- 4 379 766
- CHEMICAL ABSTRACTS, Band 96, Nr. 1, 1982, Seite 620, Zusammenfassung Nr. 6787r, Columbus, Ohio, US, Lissel et al.
- CHEMICAL ABSTRACTS, Band 99, Nr. 3, 1983, Seite 649, Zusammenfassung Nr. 22784e, Columbus, Ohio, US; Y.A. ZHDANOV et al.: "Phase-transfer catalyzed O- silylation of partially protected monosaccharides", & DOKL. AKAD. NAUK SSSR 1983, 268(4), 883-5
- IDEM
- SYNTHESIS, JOURNAL OF SYNTHETIC ORGANIC CHEMISTRY, Nr. 9, September 1985, Seiten 817-845; M. LALONDE et al.: "Use of organosilicon reagents as protective groups in organic synthesis"

## Beschreibung

Die Erfindung betrifft ein neues Verfahren zur Herstellung von O-silylierten aliphatischen Hydroxylverbindungen durch Umsetzung von aliphatischen Hydroxylverbindungen mit Triorganochlorsilanen unter Mitverwendung von Phasentransferkatalysatoren, wobei der sich bildende Chlorwasserstoff gasförmig aus dem Reaktionsgemisch entfernt wird.

Verfahren zur Silylierung von Hydroxylverbindungen sind in großer Anzahl bekannt (vgl. z.B. M.V. Kashutina, L.S. Ioffe, K.A. Tartakovskii, Russ. Chem. Rev. 44, 733 (1955) oder M. Lalonde, C.H. Chan, Synthesis 1985, 817 oder Houben-Weyl, Methoden der organischen Chemie, Bd. VI/1b, S. 739 bzw. Bd. 13/5, S. 190.

Die am meisten verwendeten Silylierungsmittel sind Triorganochlorsilane. Die bekannten Verfahren zur Herstellung von aliphatischen O-silylierten Verbindungen durch Umsetzung von aliphatischen Hydroxylverbindungen mit Triorganochlorsilanen in flüssiger Phase sind mit dem Nachteil behaftet, daß befriedigende Ausbeuten nur dann erhalten werden, wenn der entstehende Chlorwasserstoff durch Basen gebunden wird, da andernfalls mit einer nur unvollständigen Umsetzung der Ausgangsmaterialien oder mit der Bildung von Nebenprodukten gerechnet werden muß. Die Abtrennung der entstehenden Salze führt zu Ausbeuteverlusten und bedeutet eine zusätzliche und somit kostenintensive Verfahrensmaßnahme. Desweiteren ist der Anfall von Salzen in äquimolarer Menge unter ökologischen Gesichtspunkten von Nachteil.

Auch silylierte Amide werden vielfach zur Silylierung von Hydroxylgruppen eingesetzt. Auch hier muß das im Zuge der Silylierung entstehende entsilylierte Amid aufwendig aus dem Reaktionsgemisch entfernt werden.

Die Silylierung mit Hexamethyldisilazan ist ebenfalls mit Problemen behaftet. Zum einen ist die Herstellung von Hexamethyldisilazan aus Trimethylchlorsilan und Ammoniak mit dem Anfall von Ammoniumchlorid verbunden, zum anderen lassen sich nach eigenen Versuchen einige Hydroxylverbindungen mit Hexamethyldisilazan überhaupt nicht silylieren.

Auch die Silylierung durch kombinierten Einsatz von Trimethylchlorsilan und Hexamethyldisilazan ist mit dem Anfall von Ammoniumchlorid in äquimolarer Menge verbunden.

Das in DE-OS 35 05 746 beschriebene Verfahren zur Silylierung mittels Trimethylsilylcyanid ist problematisch durch die Freisetzung von toxischer Blausäure.

Obwohl O-silylierte Hydroxylverbindungen, insbesondere O-silylierte aliphatische Polyhydroxylverbindungen interessante Zwischenprodukte zur Herstellung von Estergruppen aufweisenden Polyisocyanaten darstellen (vgl. z.B. DE-OS 3 634 248), scheiterte bislang ihre großtechnische Verwendung an diesen Problemen.

Es war daher die der Erfindung zugrundeliegende Aufgabe, ein neues Verfahren zur Herstellung von O-silylierten aliphatischen Hydroxylverbindungen zur Verfügung zu stellen, welches nicht mit diesen Schwierigkeiten behaftet ist, und welches insbesondere die Herstellung der genannten Verbindungen in guten Ausbeuten ohne gleichzeitigen Anfall von hohen Mengen an Salzen bzw. an toxischen Spaltprodukten ermöglicht.

Diese Aufgabe konnte mit der Bereitstellung des nachstehend näher beschriebenen erfindungsgemäßen Verfahrens gelöst werden.

Das erfindungsgemäße Verfahren beruht auf der überraschenden Feststellung, das bei Zusatz sogenannter Phasentransferkatalysatoren aliphatische Hydroxylverbindungen mit Triorganochlorsilanen unter Abspaltung von gasförmiger Salzsäure bis zum Verbrauch einer der Ausgangskomponenten reagieren. Diese Tatsache muß als ausgesprochen überraschend bezeichnet werden, da für den Fall aliphatischer Hydroxylverbindungen bekannt ist, daß die Einstellung eines Gleichgewichts gemäß 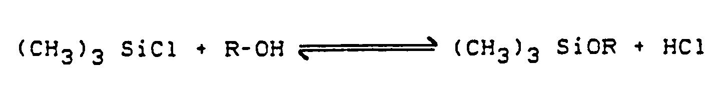
durch die Löslichkeit des Chlorwasserstoffs in der Alkoholkomponente begünstigt und eine vollständige Silylierung verhindert wird. Außerdem war bekannt, daß der freigesetzte Chlorwasserstoff die Tendenz aufweist, mit den Hydroxylverbindungen unter Bildung von unerwünschten Nebenprodukten (Alkylchloride) zu reagieren, was ebenfalls zu einer Ausbeuteverminderung führt (S.H. Langer, S. Connell, I. Wender, J. Org. Chem. 23, 50 (1958)). Bei der Reaktion zwischen Phenolen und Triorganochlorsilanen treten diese Nebenreaktionen in weit geringerem Umfang auf, jedoch wird auch in diesem Falle die Umsetzung durch die erfindungsgemäß einzusetzenden Katalysatoren beschleunigt.

Gegenstand der Erfindung ist ein Verfahren zur Herstellung von O-silylierten aliphatischen Hydroxylverbindungen durch Umsetzung von aliphatischen Hydroxylverbindungen mit Triorganochlorsilanen in Gegenwart von Phasentransferkatalysatoren, dadurch gekennzeichnet, daß man
(i) die Umsetzung in Gegenwart von Phasentransferkatalysatoren durchführt,
und
(ii) den sich bei der Umsetzung bildenden Chlorwasserstoff gasförmig aus dem Reaktionsgemisch entfernt.

Als Ausgangsmaterialien für das erfindungsgemäße Verfahren eignen sich beliebige aliphatische Hydroxylverbindungen, d.h. beliebige organische Verbindungen, die aliphatisch gebundene Hydroxylgruppen aufweisen.

Geeignete aliphatische Hydroxylverbindungen sind demzufolge einerseits niedermolekulare, ein- bis achtwertige Alkohole des Molekulargewichtsbereichs 32 bis 342 oder höhermolekulare Polyhydroxylverbindungen eines über 342 liegenden Molekulargewichts der aus der Polyurethanchemie an sich bekannten Art, d.h. Hydroxylgruppen aufweisende Polyadditions-, Polykondensations-oder Polymerisationsprodukte. Die zum Einsatz gelangenden aliphatischen Hydroxylverbindungen können funktionelle Gruppen enthalten, die frei von aktiven Wasserstoffatomen sind und gegenüber Triorganochlorsilanen oder gegenüber Chlorwasserstoff inert sind. Die Hydroxylgruppen können an primere, sekundäre oder tertiäre Kohlenstoffatome gebunden sein. Der Begriff "aliphatische Alkohole" soll auch araliphatische Alkohole wie beispielsweise Benzylalkohol, cycloaliphatische Alkohole wie beispielsweise Cyclohexanol oder cyclische Zucker bzw. Zuckeralkohole umfassen.

Als Ausgangsmaterialien für das erfindungsgemäße Verfahren geeignete ein- bis achtwertige Alkohole des Molekulargewichtsbereichs 32 bis 342 sind beispielsweise Methanol, Ethanol, n-Propanol, 2-Propanol, n-Butanol, 2-Butanol, t-Butanol, n-Pentanol, 3-Methyl-1-butanol, Neopentylalkohol, n-Hexanol, 2-Ethyl-1-butanol, n-Octanol, 2-Ethyl-1-hexanol, Ethylenglykol, Propylenglykol, Butandiol-1,4, Hexandiol-1,6, 2,2,4-Trimethylpentandiol, Glycerin, Trimethylolethan, Trimethylolpropan, Pentaerythrit, Mannit, Sorbit, Formit, Monosaccharide wie z.B. Fructose oder Glucose oder Disaccharide wie z.B. Maltose oder Saccharose, Ethergruppen aufweisende niedermolekulare Alkohole wie beispielsweise Diethylenglykol, Triethylenglykol, Dipropylenglykol, Tripropylenglykol oder andere niedermolekulare Alkoxylierungsprodukte der beispielhaft genannten mehrwertigen Alkohole, sofern sie ein Molekulargewicht von 342 nicht übersteigen, niedermolekulare Estergruppen aufweisende Polyole wie beispielsweise die Hydroxylgruppen aufweisenden, niedermolekularen Veresterungsprodukte der beispielhaft genannten mehrwertigen Alkohole mit mehrwertigen Carbonsäuren wie Adipinsäure, Phthalsäure, Tetrahydrophthalsäure und/oder Hexahydrophthalsäure, Urethangruppen aufweisende, niedermolekulare Polyole wie beispielsweise die niedermolekularen Umsetzungsprodukte der beispielhaft genannten einfachen mehrwertigen Alkohole mit unterschüssigen Mengen an organischen Polyisocyanaten wie Hexamethylendiisocyanat oder 2,4-und/oder 2,6-Diisocyanatotoluol oder beliebige Gemische derartiger niedermolekularer Alkohole. Mehrwertige Alkohole der beispielhaft genannten Art sind gegenüber einwertigen Alkoholen der beispielhaft genannten Art bevorzugt.

Zu den höhermolekularen, d.h. ein über 342 liegendes Molekulargewicht aufweisenden Hydroxylverbindungen gehören insbesondere mindestens zwei alkoholische Hydroxylgruppen aufweisende Polyadditions-, Polykondensations- oder Polymerisationsprodukte der aus der Polyurethanchemie an sich bekannten Art.

Zu den geeigneten höhermolekularen Polyhydroxylverbindungen gehören beispielsweise die aus der Polyurethanchemie an sich bekannten Polyetherpolyole des Molekulargewichtsbereichs 343 bis 10 000, vorzugsweise 1000 bis 5000, die pro Molekül 2 bis 8, vorzugsweise 2 bis 3 Hydroxylgruppen aufweisen und in an sich bekannter Weise durch Alkoxylierung geeigneter Startermoleküle zugänglich sind. Geeignete Startermoleküle sind beispielsweise Wasser oder einfache mehrwertige Alkohole der oben beispielhaft genannten Art bzw. deren Gemische. Geeignete Alkylenoxide sind insbesondere Ethylenoxid, Propylenoxid und/oder 1,2-Butylenoxid, die bei der Alkoxylierungsreaktion auch im Gemisch und/oder in beliebiger Reihenfolge zum Einsatz gelangen können.

Zu den höhermolekularen Polyhydroxylverbindungen gehören auch die aus der Polyurethanchemie an sich bekannten Polyesterpolyole eines dampfdruckosmometrisch bestimmbaren Molekulargewichts von 343 bis 10 000, vorzugsweise 1000 bis 5000, wie sie in an sich bekannter Weise durch Umsetzung von einfachen aliphatischen Polyolen der oben beispielhaft genannten Art mit unterschüssigen Mengen an mehrbasischen Säuren wie Adipinsäure, Phthalsäure, Isophthalsäure, Tetrahydrophthalsäure, Hexahydrophthalsäure oder den Anhydriden solcher Säuren bzw. beliebiger Gemische derartiger Säuren bzw. Säureanhydride zugänglich sind.

Auch Polyester aus Lactonen z.B. ε-Caprolacton, oder aus Hydroxycarbonsäuren, z.B. ω-Hydroxycapronsäure, sind einsetzbar. Ebenfalls einsetzbar sind Hydroxylgruppen aufweisende Polycarbonate des zuletztgenannten Molekulargewichtsbereichs, beispielsweise solche, die durch Umsetzung von Diolen der bereits oben beispielhaft genannten Art mit Diarylcarbonaten, z.B. Diphenylcarbonat, oder Phosgen hergestellt werden können (DE-AS 1 694 080, 1 915 908, 2 221 751 oder DE-OS 2 605 024).

Sehr gut geeignet sind auch Hydroxylgruppen aufweisende Polyester-Polycarbonate, wie sie z.B. gemäß DE-AS 1 770 245 zugänglich sind. Solche Verbindungen werden z.B. durch Reaktion von ε-Caprolacton mit Polyolen, wie z.B. Hexandiol-1,6, und anschließende Umsetzung der so erhaltenen Esterglykole mit Diphenylcarbonat hergestellt.

Als höhermolekulare aliphatische Hydroxylverbindungen ebenfalls geeignet sind die aus der Polyurethanchemie an sich bekannten Polyhydroxypolyacrylate. Diese Verbindungen weisen ein nach der Methode der Gelpermeationschromatographie unter Verwendung von Polystyrol als Standard ermittelbares Molekulargewicht Mw von 800 bis 50 000, vorzugsweise 1000 bis 20 000 und einen Hydroxylgruppengehalt von 0,1 bis 12, vorzugsweise 1 bis 10 Gew.-% auf. Ihre Herstellung erfolgt in an sich bekannter Weise durch Copolymerisation von olefinisch ungesättigten Monomeren wie z.B. Styrol, (Meth)Acrylnitril, C₁-C₈-Alkylester, beispielsweise Methyl-, Ethyl-, n-Propyl, n-Butyl-, n-Hexyl-, 2-Ethylhexyl- oder Isooctylester der (Meth)Acrylsäure mit Hydroxylgruppen aufweisenden Monomeren wie beispielsweise 2-Hydroxyethyl-, 2-Hydroxypropyl-, 3-Hydroxypropyl-, 4-Hydroxybutyl- oder 6-Hydroxyhexylester der (Meth)Acrylsäure. Auch natürliche Polyole wie z.B. Ricinusöl können gegebenenfalls eingesetzt werden.

Für das erfindungsgemäße Verfahren geeignete Triorganochlorsilane sind Verbindungen der allgemeinen Formel 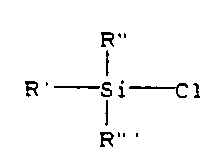
für welche
- R′, R˝ und R‴: für gleiche oder verschiedene Reste stehen und Alkyl-, Aryl-, Alkaryl-und/oder Aralkylreste bedeuten.

Vorzugsweise handelt es sich bei diesen Resten um C₁-C₆-Alkylreste, Phenylreste, Toluylreste oder Benzylreste. Ganz besonders bevorzugt handelt es sich bei den Resten um gleiche oder verschiedene C₁-C₄-Alkylreste, insbesondere Methylreste. Erfindungsgemäß geeignete Triorganochlorsilane sind z.B. Trimethylchlorsilan, t-Butyl-dimethylchlorsilan, i-Propyl-dimethylchlorsilan, Triethylchlorsilan, Chlortribenzylsilan, Chlortributylsilan, Chlortriisopropylsilan, Chlortrihexylsilan, Chlortriisobutylsilan, Chlortriphenylsilan.

Geeignete Phasentransferkatalysatoren sind z.B. die an sich bekannten quartären Ammonium- oder Phosphoniumsalze und Kronenether. Bevorzugt einsetzbar sind quartäre Ammonium- und Phosphoniumsalze.

Gut geeignet sind beispielsweise Verbindungen der allgemeinen Formel 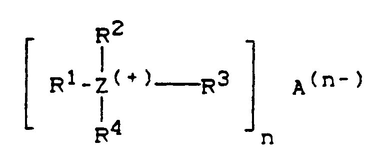
für welche
- Z: für Stickstoff oder Phosphor steht,
- R¹, R², R³ und R⁴: für gleiche oder verschiedene Reste stehen und aliphatische, cycloaliphatische, aromatische oder araliphatische Kohlenwasserstoffreste stehen, wobei die Summe der Anzahl der Kohlenstoffatome dieser Reste bei 8 bis 28 liegt,
- n: für 1 oder 2 steht und
- A: für ein n-wertiges Anion einer Säure oder ein Hydroxid-Anion steht.

Besonders gut geeignet sind Ammoniumsalze der zuletztgenannten allgemeinen Formel, für welche
- Z: für Stickstoff steht,
- R¹, R², R³ und R⁴: für gleiche oder verschiedene Reste stehen und aliphatische Kohlenwasserstoffreste mit 1 bis 18, Phenylreste oder Benzylreste bedeuten, mit der Maßgabe, daß mindestens drei der Reste aliphatische Kohlenwasserstoffreste darstellen und die Summe der Anzahl der Kohlenstoffatome aller Reste bei 8 bis 24 liegt,
- n: für 1 steht und
- A: für ein Bromid- oder Chlorid- oder Iodid-Anion steht.

Konkrete Beispiele für geeignete Phosphoniumsalze sind beispielsweise Tributylhexadecylphosphoniumbromid, Ethyltriphenylphosphoniumbromid, Tetraphenylphosphoniumchlorid, Benzyltriphenylphosphonium- oder Tetrabutylphosphoniumchlorid.

Konkrete Beispiele für quartäre Ammoniumsalze sind Benzyltriethylammoniumchlorid, Tetrabutylammoniumchlorid, -bromid, -iodid oder -hydroxid, Benzyltrimethylammoniumchlorid oder -hydroxid, Cetyltrimethylammoniumbromid oder -chlorid, Benzyltributylammoniumbromid, Tetra-n-pentylammoniumchlorid, Tetra-n-hexylammoniumchlorid, Trioctylpropylammoniumchlorid, Tetra-n-butylammoniumhydrogensulfat, Tetra-n-hexylammoniumhydrogensulfat. Auch quartäre Ammoniumhydroxide der beispielhaft genannten Art sind im Rahmen der Erfindung als "Salze" anzusehen und sollen somit von diesem Begriff umfaßt werden.

Unter den genannten Ammoniumsalzen haben sich die Tetraorganylammoniumhalogenide als besonders geeignet erwiesen.

Kronenether sind ebenfalls für das erfindungsgemäße Verfahren als Phasentransferkatalysatoren geeignet, jedoch weniger bevorzugt. In Betracht kommen beispielsweise 1,4,7,10,13-Pentaoxacyclopentadecan (15-Krone-5), 1,4,7,10,13,16-Hexaoxacyclooctadecan (18-Krone-6), Dibenzo-18-Krone-6 oder Dicyclohexyl-18-Krone-6.

Bei der Durchführung des erfindungsgemäßen Verfahrens werden die Phasentransferkatalysatoren in Mengen von 0,001 bis 10 Mol-%, vorzugsweise 0,005 bis 1,0 Mol-% und besonders bevorzugt von 0,01 bis 0,2 Mol-%, bezogen auf die in den Hydroxylgruppen aufweisenden Verbindungen vorliegenden Hydroxylgruppen, eingesetzt. Die Verwendung von möglichst geringen Katalysatormengen ist empfehlenswert, da dann auf deren Entfernung nach Beendigung der Reaktion verzichtet werden kann.

Die Triorganochlorsilane werden bei der Durchführung des erfindungsgemäßen Verfahrens in einer solchen Menge eingesetzt, die den zu silylierenden Hydroxylgruppen mindestens äquivalent ist. Vielfach ist es zweckmäßig, einen Überschuß des Silylierungsmittels einzusetzen, der in der Regel 5 bis 300, vorzugsweise 20 bis 100 Mol-%, bezogen auf die zu silylierenden Hydroxylgruppen, beträgt.

Die Durchführung des erfindungsgemäßen Verfahrens erfolgt im allgemeinen innerhalb des Temperaturbereichs von 20 bis 160°C, vorzugsweise 55 bis 130°C.

Die erfindungsgemäße Reaktion wird im allgemeinen ohne Lösungsmittel durchgeführt. Die zu silylierenden Verbindungen und das Triorganochlorsilan werden nach Zugabe des Phasentransferkatalysators auf die Reaktionstemperatur, vorzugsweise auf Rückflußtemperatur erhitzt, wobei die entstehende Salzsäure gasförmig abgetrennt wird. Da bei Einsatz eines größeren Öberschusses Triorganochlorsilan der Siedepunkt der Reaktionsmischung nicht wesentlich über dem des Silylierungsmittels liegt und einige Verbindungen dann nicht vollständig silyliert werden, ist es in solchen Fällen ratsam, mit einer Teilmenge an Triorganochlorsilan die Reaktion zu beginnen und erst bei Erreichen der gewünschten Reaktionstemperatur weiteres Triorganochlorsilan zuzugeben. In solchen Fällen kann es auch ratsam sein, die gewünschte Reaktionstemperatur durch die Zugabe eines geeigneten, inerten, hochsiedenden Lösungsmittels einzustellen.

Als "inerte organische Lösungsmittel" seien bevorzugt genannt: aliphatische, cycloaliphatische, aromatische Kohlenwasserstoffe, die gegebenenfalls durch Halogen wie Fluor, Chlor, Brom oder durch Nitro substituiert sind, Ester, Ether, tertiäre Amide und Sulfone, ferner Ketone, welche nicht enolisieren.

Beispiele für geeignete Lösungsmittel sind Isooctan, Dodecan, Toluol, Nitrobenzol, Chlorbenzol, Xylol, Testbenzine, die n-Butylether, Diphenylether, Essigsäurebutylester, Benzoesäureethylester oder Gemische derartiger Lösungsmittel.

In einigen Fällen kann es zweckmäßig sein, die erfindungsgemäße Reaktion unter erhöhtem Druck durchzuführen, da die Anwendung von Druck höhere Reaktionstemperaturen und die Verwendung eines größeren Überschusses Silylierungsagenz erlaubt, was die Vervollständigung der gewünschten Reaktion begünstigt.

Zur Aufarbeitung wird der gegebenenfalls vorliegende Überschuß an Triorganosilan abdestilliert. Bei Einsatz reiner Ausgangsprodukte liegen nach der gegebenenfalls erfolgten Entfernung des Phasentransferkatalysators durch Filtration die reinen silylierten Endprodukte vor. Eine weitere Reinigung kann für den Fall niedermolekularer Ausgangsprodukte durch Destillation erfolgen.

Die erfindungsgemäß hergestellten O-silylierten Hydroxylverbindungen sind für die organische Chemie von breitem Interesse. Beispielsweise kann durch Silylierung eine Löslichkeit in unpolaren Lösungsmitteln erreicht werden. Dadurch werden oft Umsetzungen in homogener Phase möglich. Ferner ändert sich die Flüchtigkeit organischer Verbindungen durch Trialkylsilylierung entscheidend; viele Verbindungen werden erst durch Silylierung unzersetzt destillierbar.

Trialkylsilylether sind außerdem für die präparative organische Chemie von Interesse.

Die erfindungsgemäß hergestellten silylierten Hydroxylverbindungen eignen sich insbesondere zur Herstellung von Estergruppen-haltigen Isocyanaten. Zu diesem Zweck werden die Triorganosiloxyverbindungen mit Isocyanatocarbonsäurechloriden gemäß der Lehre der DE-OS 36 34 248 unter Abspaltung des Silylierungsagenz zur Reaktion gebracht.

Bei Verwendung der besonders bevorzugten Tetraorganoammoniumhalogenide als Katalysatoren ist es ein großer Vorteil, daß diese Verbindungen auch die Veresterungsreaktion katalysieren und daher vor dem Veresterungsschritt nicht entfernt werden müssen.

Technisch besonders interessante Polyisocyanate erhält man durch Einsatz erfindungsgemäß hergestellter polyfunktioneller silylierter Alkohole. Solche Polyisocyanate eignen sich als Aufbaukomponenten für Polyurethane, insbesondere als wertvolle Lackrohstoffe.

Die folgenden Beispiele sollen das erfindungsgemäße Verfahren näher erläutern. Alle Prozentangaben beziehen sich, soweit nichts anderslautendes vermerkt, auf das Gewicht.

### Beispiel 1

### 1-Trimethylsiloxybutan:

1 Mol n-Butanol und 1,5 Mol Trimethylchlorsilan werden unter Zusatz von 0,0005 Mol Tetra-n-butylammoniumbromid zum Rückfluß (54-91°C) erhitzt, wobei eine lebhafte HCl-Entwicklung beobachtet wird. Nach Beendigung der Gasentwicklung zeigt das IR-Spektrum keine OH-Bande mehr. Nach destillativer Aufarbeitung erhält man als Destillat reines 1-Trimethylsiloxybutan.
Ausbeute: 92 %
Kp.: 124-125°C

### Beispiel 2

### 2,2-Dimethyl-1-trimethylsiloxypropan:

1 Mol Neopentylalkohol und 1,5 Mol Trimethylchlorsilan werden unter Zusatz von 0,0005 Mol Tetra-n-butylammoniumbromid zum Rückfluß (54-100°C) erhitzt bis das IR-Spektrum keine OH-Bande mehr zeigt. Zur Aufarbeitung fraktioniert man bei Normaldruck.
Ausbeute: 94 %
Kp.: 121°C

### Beispiel 3

### Trimethylsiloxycyclohexan:

1 Mol Cyclohexanol, 1,5 Mol Trimethylchlorsilan, 0,0005 Mol Tetra-n-butylammoniumbromid werden wie in Beispiel 1 unter Rückflußtemperatur (54-97°C) umgesetzt und anschließend destillativ aufgearbeitet.
Ausbeute: 95 %
Kp.: 56°C/15 mm

### Beispiel 4

### 1,1-Dimethyl-1-trimethylsiloxyethan:

1 Mol tert.-Butanol, 1,5 Mol Trimethylchlorsilan, 0,001 Mol Tetra-n-butylammoniumbromid werden wie in Beispiel 1 unter Rückflußtemperatur (54-67°C) umgesetzt und anschließend destillativ aufgearbeitet.
Ausbeute: 87 %
Kp.: 101-103°C

### Beispiel 5

### 1,4-Bis-trimethylsiloxybutan:

1 Mol Butandiol-1,4, 3 Mol Trimethylchlorsilan, 0,002 Mol Tetra-n-butylammoniumbromid werden wie in Beispiel 1 unter Rückflußtemperatur (54-96°C) umgesetzt und anschließend destillativ aufgearbeitet.
Ausbeute: 98 %
Kp.: 92 bis 94 %/17 mm

### Beispiel 6

### 2,2-Bis-trimethylsiloxymethyl-1-trimethylsiloxypropan:

1 Mol Trimethylolpropan, 4 Mol Trimethylchlorsilan, 0,003 Mol Triethylbenzylammoniumchlorid werden wie in Beispiel 1 unter Rückflußtemperatur (54-104°C) umgesetzt und anschließend destillativ aufgearbeitet.
Ausbeute: 96 %
Kp.: 124 bis 125°C/10 mm

### Beispiel 7

### 2,2-Bis-trimethylsiloxymethyl-1,3-bis-trimethylsiloxypropan:

1 Mol Pentaerythrit, 6 Mol Trimethylchlorsilan und 0,004 Mol Triethylbenzylammoniumchlorid werden wie in Beispiel 1 unter Rückflußtemperatur (54-86°C) umgesetzt und anschließend destillativ aufgearbeitet.
Ausbeute: 93 %
Kp.: 128 bis 130°C/5 mm

### Beispiel 8

### 1,4-Bis-trimethylsiloxymethyl-cyclohexan:

1 Mol Cyclohexandimethanol, 3 Mol Trimethylchlorsilan und 0,002 Mol Triethylbenzylammoniumchlorid werden wie in Beispiel 1 unter Rückflußtemperatur (56-100°C) umgesetzt. Nach beendeter Reaktion destilliert man überschüssiges Silylierungsagenz ab und filtriert nach Erkalten vom ausgefallenen Katalysator ab. Der Silylether verbleibt in quantitativer Ausbeute.

### Beispiel 9

### 1,2,3-Tris-trimethylsiloxypropan:

1 Mol Glycerin, 4 Mol Trimethylchlorsilan und 0,003 Mol Trimethylbenzylammoniumchlorid werden wie in Beispiel 1 unter Rückflußtemperatur (54-102°C) umgesetzt. Nach beendeter Reaktion destilliert man überschüssiges Silylierungsagenz ab. Der Katalysator wird nach Erkalten abfiltriert.

### Beispiel 10

### 1,4-Bis-trimethylsiloxybutan:

1 Mol Butandiol-1,4, 3 Mol Trimethylchlorsilan, 0,002 Mol Tributyl-hexadecylphosphoniumbromid werden wie in Beispiel 1 unter Rückflußtemperatur (56-96°C) umgesetzt. Die Aufarbeitung erfolgt durch fraktionierte Destillation.
Ausbeute: 84 %
Kp.: 92 bis 94°C/17 mm

### Beispiel 11

### Herstellung eines Bis-trimethylsiloxypolyethers:

1000 g eines Polyethers der OH-Zahl 56 (0,5 Mol Polyether, 1,0 Mol Hydroxylgruppen), hergestellt durch Propoxylierung von Propylenglykol, 2 Mol Trimethylchlorsilan und 0,001 Mol Tetrabutylammoniumbromid werden bis zum Ende der HCl-Entwicklung zum Rückfluß (54-96°C) erhitzt. Das IR-Spektrum zeigt nach beendeter Reaktion keine OH-Bande mehr. Überschüssiges Trimethylchlorsilan wird durch Destillation unter vermindertem Druck aus dem Reaktionsgemisch entfernt.

### Beispiel 12

### Herstellung eines Bis-trimethylsiloxypolyesters:

850 g eines Polyesters der OH-Zahl 65,9 (0,5 Mol Polyester = 1 Mol Hydroxylgruppen), hergestellt durch Kondensation von Adipinsäure mit einem Gemisch aus Hexandiol-1,6 und Neopentylglykol im Molverhältnis 1,65:1 werden wie im Beispiel 11 mit 2 Mol Trimethylchlorsilan unter Zusatz von 0,002 Mol Triethylbenzylammoniumchlorid bei 54-92°C umgesetzt. Nach Entfernen flüchtiger Bestandteile verbleibt der Bis-trimethylsiloxypolyester in quantitativer Ausbeute.

### Beispiel 13

### Herstellung eines Bis-trimethylsiloxypolyestercarbonats:

1000 g eines Polyestercarbonatdiols der OH-Zahl 56 (0,5 Mol Diol = 1,0 Mol Hydroxylgruppen), hergestellt gemäß DE-AS 1 770 245 durch Umsetzung von Hexandiol-1,6 mit ε-Caprolacton im Molverhältnis 1:1 und anschließende weitere Umsetzung des so erhaltenen Esterdiols mit Diphenylcarbonat, werden wie in Beispiel 11 beschrieben mit 2 Mol Trimethylchlorsilan und 0,002 Mol Tetra-n-butylammoniumbromid bei 54-97°C umgesetzt. Nach Entfernen flüchtiger Bestandteile verbleibt das silylierte Polyestercarbonat in quantitativer Ausbeute.

### Beispiel 14

### Silylierung eines hydroxyfunktionellen Polyacrylats:

1217 g einer 80 %igen Lösung in Xylol der OH-Zahl 46 eines Polyhydroxypolyacrylats des Molekulargewichts Mw 3000, hergestellt durch Copolymerisation von 50 Gew.-Teilen n-Butylacrylat, 34 Gew.-Teilen 2-Ethylhexylacrylat und 10 Gew.-Teilen Hydroxyethylacrylat in Gegenwart von 6 Gew.-Teilen Di-t-butylperoxid in 80 %iger xylolischer Lösung werden wie in Beispiel 11 beschrieben mit 2 Mol Trimethylchlorsilan und 0,002 Mol Tetra-n-butylammoniumbromid bei 60-91°C umgesetzt. Nach beendeter Reaktion wird überschüssiges Trimethylchlorsilan durch Destillation aus dem Reaktionsgemisch entfernt.

### Beispiel 15

### Silylierung von Ricinusöl:

343 g technisches Ricinusöl der OH-Zahl 163 (1,0 Mol Hydroxylgruppen) und 2 Mol Trimethylchlorsilan werden unter Zusatz von 0,002 Mol Tetra-n-butylammoniumbromid zum Rückfluß erhitzt. Nach beendeter Gasentwicklung zeigt das IR-Spektrum keine OH-Bande mehr. Flüchtige Bestandteile werden im Vakuum abdestilliert.

### Beispiel 16

### -n-Butoxy-triethylsilan:

0,1 Mol n-Butanol, 0,15 Mol Triethylchlorsilan, 0,0005 Mol Triethylbenzylammoniumchlorid werden in 50 ml p-Xylol zum Rückfluß (80-110°C) erhitzt. Nach beendeter HCl-Entwicklung fraktioniert man unter vermindertem Druck.
Ausbeute: 68 %
Kp.: 70 bis 73°C/10 mm

### Beispiel 17

### n-Butoxy-tert.-butyl-dimethylsilan:

0,1 Mol n-Butanol, 0,15 Mol t-Butyldimethylchlorsilan, 0,0005 Mol Triethylbenzylammoniumchlorid werden in 50 ml p-Xylol zum Rückfluß (77-106°C) erhitzt. Nach beendeter Reaktion werden überschüssiges Silylierungsagenz und Xylol unter vermindertem Druck abdestilliert.

### Beispiel 18

### Herstellung eines Estergruppen-haltigen Polyisocyanats gemäß DE-OS 36 34 248:

1 Mol Trimethylolpropan, 4 Mol Trimethylchlorsilan und 0,003 Mol Tetra-n-butylammoniumbromid werden zum Rückfluß erhitzt. Nach beendeter HCl-Entwicklung zeigt das IR-Spektrum keine OH-Bande mehr. Zu der hydroxylfreien Mischung tropft man bei 70°C 3 Mol 6-Isocyanatohexansäurechlorid zügig zu. Man rührt bei 70 bis 80°C und destilliert überschüssiges sowie entstehendes Trimethylchlorsilan laufend aus dem Reaktionsgemisch ab. Die Reaktion kann IR-spektroskopisch anhand der Abnahme der Säurechloridbande verfolgt werden. Nach beendeter Reaktion entfernt man letzte Reste Trimethylchlorsilan durch Dünnschichtdestillation und erhält ein Polyisocyanat mit folgenden Kenndaten:
Viskosität: 150 mPas (22°C)
NCO-Gehalt: 21,6 %
Das beschriebene Polyisocyanat eignet sich gut zur Herstellung von lösungsmittelarmen Zweikomponenten-Polyurethanlacken.

## Patentansprüche

1. Verfahren zur Herstellung von O-silylierten aliphatischen Hydroxylverbindungen durch Umsetzung von aliphatischen Hydroxylverbindungen mit Triorganochlorsilanen in Gegenwart von Phasentransferkatalysatoren, dadurch gekennzeichnet, daß man
(i) die Umsetzung in Gegenwart von Phasentransferkatalysatoren durchführt,
und
(ii) den sich bei der Umsetzung bildenden Chlorwasserstoff gasförmig aus dem Reaktionsgemisch entfernt.

2. Verfahren gemäß Anspruch 1, dadurch gekennzeichnet, daß man Phasentransferkatalysatoren, ausgewählt aus der Gruppe bestehend aus quartären organischen Ammoniumsalzen, quartären organischen Phosphoniumsalzen und Kronenethern, verwendet.

3. Verfahren gemäß Anspruch 1 und 2, dadurch gekennzeichnet, daß man als Phasentransferkatalysatoren quartäre Ammonium- oder Phosphoniumsalze der allgemeinen Formel 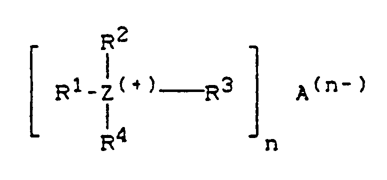 verwendet, für welche
Z für Stickstoff oder Phosphor steht,
R¹, R², R³ und R⁴ für gleiche oder verschiedene Reste stehen und aliphatische, cycloaliphatische, aromatische oder araliphatische Kohlenwasserstoffreste bedeuten, wobei die Summe der Anzahl der Kohlenstoffatome dieser Reste 8 bis 28 beträgt,
n für 1 oder 2 steht und
A für ein n-wertiges Anion einer Saure oder ein Hydroxid-Anion steht.

4. Verfahren gemäß Anspruch 1 bis 3, dadurch gekennzeichnet, daß man als Phasentransferkatalysatoren quartäre Ammoniumhalogenide der in Anspruch 3 genannten allgemeinen Formel verwendet, für welche
Z für Stickstoff steht,
R¹, R², R³ und R⁴ für gleiche oder verschiedene Reste stehen und aliphatische Kohlenwasserstoffreste mit 1 bis 18 Kohlenstoffatomen, Phenyl- oder Benzylreste stehen, wobei mindestens drei der genannten Reste für aliphatische Kohlenwasserstoffreste stehen und wobei die Summe der Anzahl der Kohlenstoffatome aller Reste bei 8 bis 24 liegt,
n für 1 steht und
A für ein Bromid- oder Chlorid- oder Iodid-Ion steht.

5. Verfahren gemäß Anspruch 1 bis 4, dadurch gekennzeichnet, daß man als Triorganochlorsilan Verbindungen der allgemeinen Formel 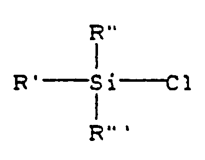 verwendet, wobei
R', R'' und R''' für gleiche oder verschiedene Alkylreste mit jeweils 1 bis 4 Kohlenstoffatomen stehen.

6. Verfahren gemäß Anspruch 1 bis 5, dadurch gekennzeichnet, daß man als Triorganochlorsilan Trimethylchlorsilan verwendet.

7. Verfahren gemäß Anspruch 1 bis 6, dadurch gekennzeichnet, daß man als aliphatische Hydroxylverbindungen ein- bis achtwertige Alkohole des Molekulargewichtsbereichs 32 bis 342 oder ein Gemisch derartiger Alkohole verwendet.

8. Verfahren gemäß Anspruch 1 bis 7, dadurch gekennzeichnet, daß man als aliphatische Hydroxylverbindungen Hydroxylgruppen aufweisende Polyadditions-, Polykondensations- oder Polymerisationsprodukte mit einem über 342 liegenden Molekulargewicht verwendet.

## Claims

1. Process for the production of O-silylated aliphatic hydroxyl compounds by reacting aliphatic hydroxyl compounds with triorganochlorosilanes in the presence of phase transfer catalysts, characterised in that
(i) the reaction is performed in the presence of phase transfer catalysts,
and
(ii) the hydrogen chloride formed during the reaction is removed from the reaction mixture in the gaseous state.

2. Process according to claim 1, characterised in that phase transfer catalysts are used which are selected from the group consisting of quaternary organic ammonium salts, quaternary organic phosphonium salts and crown ethers.

3. Process according to claims 1 and 2, characterised in that the phase transfer catalysts used are quaternary ammonium or phosphonium salts of the general formula 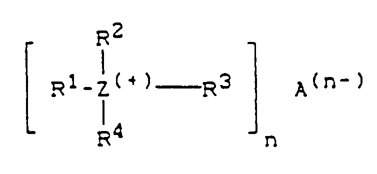 in which
Z denotes nitrogen or phosphorus,
R¹, R², R³ and R⁴ denote identical or different residues and mean aliphatic, cycloaliphatic, aromatic or araliphatic hydrocarbon residues, wherein the sum of the number of carbon atoms in these residues is 8 to 28,
n denotes 1 or 2 and
A denotes an n-valent anion of an acid or a hydroxide anion.

4. Process according to claims 1 to 3, characterised in that the phase transfer catalysts used are quaternary ammonium halides of the general formula stated in claim 3, in which
Z denotes nitrogen,
R¹, R², R³ and R⁴ denote identical or different residues and denote aliphatic hydrocarbon residues with 1 to 18 carbon atoms, phenyl or benzyl residues, wherein at least three of the stated residues denote aliphatic hydrocarbon residues and wherein the sum of the number of carbon atoms in all the residues is 8 to 24,
n denotes 1 and
A denotes a bromide or chloride or iodide ion.

5. Process according to claims 1 to 4, characterised in that compounds of the general formula 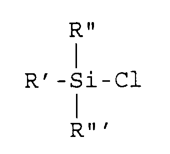 are used as the triorganochlorosilane, wherein
R', R'' and R''' denote identical or different alkyl residues, each having 1 to 4 carbon atoms.

6. Process according to claims 1 to 5, characterised in that trimethylchlorosilane is used as the triorganochlorosilane.

7. Process according to claims 1 to 6, characterised in that mono- to octahydric alcohols of the molecular weight range from 32 to 342 or a mixture of such alcohols are used as the aliphatic hydroxyl compounds.

8. Process according to claims 1 to 7, characterised in that polyaddition, polycondensation or polymerisation Products having hydroxyl groups and a molecular weight of above 342 are used as the aliphatic hydroxyl compounds.

## Revendications

1. Procédé pour la préparation de composés hydroxylés aliphatiques O-silylés par mise en réaction de composés hydroxylés aliphatiques avec des triorganochlorosilanes en présence de catalyseurs de transfert de phases, caractérisé en ce que
(i) on effectue la mise en réaction en présence de catalyseurs de transfert de phases, et
(ii) on élimine du mélange réactionnel sous forme gazeuse l'acide chlorhydrique qui se forme lors de la mise en réaction.

2. Procédé selon la revendication 1, caractérisé en ce qu'on utilise des catalyseurs de transfert de phases choisis parmi le groupe constitué par des sels d'ammonium organiques quaternaires, par des sels de phosphonium organiques quaternaires et par des éthers-couronnes.

3. Procédé selon les revendications 1 et 2, caractérisé en ce que, comme catalyseurs de transfert de phases, on utilise des sels d'ammonium ou de phosphonium quaternaires répondant à la formule générale 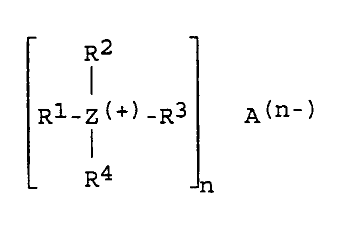 dans laquelle
Z représente un atome d'azote ou un atome de phosphore,
R¹, R², R³ et R⁴ représentent des radicaux identiques ou différents et désignent des radicaux d'hydrocarbures aliphatiques, cycloaliphatiques, aromatiques ou araliphatiques, dans lesquels la somme du nombre des atomes de carbone de ces radicaux s'élève de 8 à 28,
n représente 1 ou 2, et
A représente un anion d'un acide à valence n ou encore un anion hydroxyde.

4. Procédé selon les revendications 1 à 3, caractérisé en ce que, comme catalyseurs de transfert de phases, on utilise des halogénures d'ammonium quaternaires répondant à la formule générale mentionnée à la revendication 3, dans laquelle
Z représente un atome d'azote,
R¹, R², R³ et R⁴ représentent des radicaux identiques ou différents et désignent des radicaux d'hydrocarbures aliphatiques contenant de 1 à 18 atomes de carbone, des radicaux phényle ou des radicaux benzyle, dans lesquels au moins trois des radicaux mentionnés représentent des radicaux d'hydrocarbures aliphatiques et dans lesquels la somme du nombre des atomes de carbone de tous les radicaux se situe de 8 à 24,
n représente 1, et
A représente un ion bromure ou un ion chlorure ou encore un ion iodure.

5. Procédé selon les revendications 1 à 4, caractérisé en ce que, comme triorganochlorosilane, on utilise des composés répondant à la formule générale 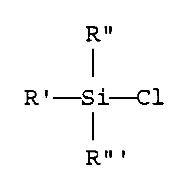 dans laquelle
R', R'' et R''' représentent des radicaux alkyle identiques ou différents contenant respectivement de 1 à 4 atomes de carbone.

6. Procédé selon les revendications 1 à 5, caractérisé en ce que, comme triorganochlorosilane, on utilise le triméthylchlorosilane.

7. Procédé selon les revendications 1 à 6, caractérisé en ce que, comme composés hydroxylés aliphatiques, on utilise des alcools mono- à octavalents du domaine de poids moléculaire de 32 à 342 ou encore un mélange d'alcools de ce type.

8. Procédé selon les revendications 1 à 7, caractérisé en ce que, comme composés hydroxylés aliphatiques, on utilise des produits de polyaddition, de polycondensation ou de polymérisation présentant des groupes hydroxyle, dont le poids moléculaire est supérieur à 342.
